# EUROPEAN PATENT APPLICATION

(11) **EP 3 695 715 A1**
(43) Date of publication of application: **19.08.2020**
(21) Application number: 20156589.2
(22) Date of filing: 11.02.2020
(51) Int. Cl.: A01K 15/02

(54) **ANIMAL FEEDING ROBOT WHICH DISCHARGES FEED BY GRAVITY**

(30) Priority: 16.02.2019 KR 20190018286; 14.01.2020 KR 20200005036
(71) Applicant: Roboi Inc., Gyeonggi-do 16656 (KR)
(72) Inventor: LEE, Jong Seob, Gyeonggi-do 16363 (KR); KONG, Jin Seong, Incheon 21125 (KR); KIM, Jeong Jae, Seoul 08787 (KR); KIM, Joo Hyun, Goyang-si, Gyeonggi-do 10508 (KR); HYUN, Kim, Incheon 21940 (KR)
(74) Representative: Brann AB

(57) **Abstract**

The present invention provides an animal feeding robot which releases feed to the outside by the action of a physical external force or gravity applied to the robot by an animal. The robot is a robot for animals, which is controlled by wireless internet via a computer program for robot control installed in a mobile device or computer, and in particular, the robot is characterized in that the feed discharge unit therein does not include at all any electronic or mechanical control device to control the discharge of feed, but only allows the feed to be discharged by the action of a physical force or gravity applied by an animal. That is, the animal feeding robot of the present invention has completely removed the risk that may occur in case where power source is exhausted due to consumption during the operation of an electronic/mechanical control means, and thereby allows the feed to be discharged by the action of a physical external force or gravity applied on the robot by an animal even if the power source is exhausted during the operation of remote control in the absence of the breeder, and minimizes the risk of interruption in the feeding cycle even when the power source is exhausted due to consumption.

## Description

### BACKGROUND OF THE INVENTION

### Field of the invention

The present invention relates to an animal feeding robot which discharges feed to the outside by the action of a physical external force or gravity without any electronic/mechanical operation device for discharging the feed.

More specifically, the present invention relates to an animal feeding robot, which is controlled through wireless internet by a computer program for controlling robots or a remote control application program (hereinafter abbreviated as "control App.") installed on a mobile device (*e.g.,* smartphones) or operated according to an autonomous operation program input into a control unit inside the robot body, in which the animal feeding robot includes: a signal transmission/reception unit for receiving control signals from the control application program; wheels installed on rotation shafts protruding on both sides of the robot body; a motor for transmitting a rotational force of the rotation shaft to the wheels; a power source for providing power to the motor, the control unit, and the signal receiving unit; and a power source switch; a control unit for controlling the direction and speed of the robot with regard to forward movement, backward movement, and rotation, or for rotating the robot body in response to contact detection of a detection sensor according to an autonomous operation mode program input to the control unit, according to the control signal received through the wireless internet from the control application program; a feed discharge unit for storing and discharging animal feed; a housing of the robot body for enclosing the motor, the power source, the power source switch, the signal transmission/reception unit, the control unit, the rotation shaft, and the feed discharge unit; and bearings disposed between the housing of the robot body and the rotation shaft; and wherein the feed is discharged to the outside by the action of an external force or gravity applied to the robot by an animal, without a separate electronic or mechanical activation device designed only for feeding.

In particular, the present invention relates to an animal feeding robot, which is characterized in that the feed discharge unit does not include at all any electronic or mechanical control device to control the discharge of feed but only allows the feed to be discharged by the action of a physical force or gravity applied thereon. That is, the animal feeding robot of the present invention reduces the exhaustion of power source due to consumption during the operation of an electronic/mechanical control means, and thereby, allows the feed to be discharged by the action of a physical external force or gravity applied on the robot by an animal even if the power source is exhausted during the operation of remote control in the absence of the breeder, and minimizes the risk of interruption in the feeding cycle even when the power source is exhausted due to consumption.

Additionally, the present invention relates to an animal feeding robot, which aims at eliminating the risk of disrupting the feeding cycle due to power source exhaustion by maximizing the remote control uptime in the absence of a breeder, by minimizing power source consumption of the robot through reduction of the need of an ultrasonic sensor, which unnecessarily stimulates the hearing and vision of animals and consumes power source, or wireless internet communication, which consumes excessive power source.

### Related Art

With the recent surge in animal breeding, the development of domestic robots that play with or feed animals is significantly increasing. Along with the development of various supplies and foods for animal breeding, a variety of equipments are being distributed to enable the protection and management of animals in the absence of a breeder.

However, due to the rough and aggressive behaviors of animals, such as dogs and cats, against robots often result in functional failures of these robots, to which precise operation is essential. In particular, various animal breeding robots, in which their feed release rests on a precise electronic control means and a precise mechanical control means, have the problem of malfunction or easy failure.

In addition, the robots equipped with such precise mechanical and electronic control means shows a significantly higher level of power consumption by the operation of such control means. and thus, the remote operation uptime becomes shorter in the absence of a breeder.

In recent years, with the rapid increase in the number of single-person or dual-income households, those who raise animals indoors are also on the rise. As the number of single-person and dual-income couple households who breed animals increases, the number of cases in which pets are left unprotected is also increasing in the absence of their breeder.

As such, in the case of raising animals in single-person or dual-income couple households, when the breeder goes to work or on travels, the animals being raised must spend a considerable amount of time alone, and may spend a long period of time indoors without food thereby causing disease, such as animal depression.

Therefore, there is an increasing need for the development of an animal feeding robot that can feed animals in the absence of a breeder, provide visual and olfactory stimuli to prevent the animals from feeling isolated, and induce animal vital activity.

According to these needs, various kinds of animal breeding robots have been developed or have already been released. However, for enabling the operation of these robots and feeding animals by the same for a long period of time in the absence of a breeder, a significant amount of independent power sources and sufficient charging are required.

However, when a robot's power source is exhausted in the absence of a breeder, there was a problem in that the animal feeding robot can no longer be operated as a robot and feed discharge is also terminated, thus making it impossible to take care of animals by remote control breeding.

Accordingly, in order to minimize the consumption of power energy required for the operation of the robot and to minimize the causes of malfunction or failure, there is a need for the development of an animal breeding robot with a new concept, in which the feed discharge function requiring sophisticated mechanical/electronic control is maximally suppressed.

Additionally, there is an urgent need for the development of an animal breeding robot that has strong durability against the physical external force applied by the animal while being capable of preventing functional interruptions, at least in feeding, in any case, even when the robot's power source is exhausted or discharged in the absence of the breeder.

### [Prior Art Documents]

### [Patent Documents]

Korea Patent Application Publication No. 10-2015-0070624 relates to a pet robot that also serves as an indoor cleaning robot. However, in this invention, the robot is controlled so that its sensor can follow a pet, but the pet actually tracks the moving object out of curiosity. Therefore, the cited invention has a practical problem in that the robot approaches toward a pet, and the pet, while tracking the robot, is highly likely to collide with the robot. Additionally, since the objects of this invention are not only to manage pets, but also to serve as a cleaning device, this invention has a problem in that the robot is not expected to have the effect of managing pets because of its low ability to communicate with pets.

Korea Patent Application Publication No. 10-2006-0132381 discloses a mobile communication system capable of pet management and a method of operating the same. This invention discloses a technology, in which the system is configured to include a home server that controls the operation of home appliances connected to the network and checks the status of a pet in the home through a camera, a carrier server for transmitting the status data of the pet received from the home server, and a mobile communication terminal for controlling an operation of the home appliances by inputting control commands for managing the pet through the status data received from the carrier server, and operates the home server and home appliances connected to the home server through the mobile operator server from the mobile communication terminal thereby allowing a user to observe the status of pets in their home in real time from the outside, and accordingly, it is possible that the pet can be managed by outputting the visual/audio data of the user or through the operation of the home appliances, and additionally, it is possible to save the cost and improve user convenience by not requiring a separate subscription to a website and requesting data.

However, this invention not only has no means of feeding pets, but it also fails to disclose any realistic means for reducing the time of absence of maintenance due to malfunction or failure of such a feeding device or the exhaust or lack of power sources.

Korea Patent Registration No. 10-1256054 relates to a pet care system and a method using two-way communication. This invention discloses a technology, in which the system is configured to include a main terminal for controlling the operation of the home appliances connected to the wired/wireless network and receiving and outputting voice and image information from the home appliances or a built-in camera and a microphone, and a user terminal for receiving and outputting voice and image information from the main terminal through the wired/wireless network, receiving control commands input by the user and voice and image information of the user, and transmitting the same to the main terminal, in which the main terminal outputs the voice and image information of the user transmitted from the user terminal through the home appliances or a built-in display unit and a speaker, and controls the operation of the home appliances or the main terminal according to the control commands.

This prior art discloses that this invention is only able to monitor animals and transmit visual or audio signals, but does not mention any means for feeding animals or remotely feeding them or preventing them from being failed or malfunctioning, and this invention fails to disclose any method at all as to how to reduce the consumption of electrical energy so as to reduce the occurrence of unmanageable time caused by power source consumption.

Korea Patent Registration No. 10-1413043 (2014) relates to a pet care system and a method using real-time two-way communication. The pet care system of this invention discloses a technology, in which the system is configured to include a main terminal for controlling the operation of the home appliances connected to the wired/wireless network and receiving and outputting voice and image information from the home appliances or a built-in camera and a microphone, and a user terminal for receiving and outputting voice and image information from the main terminal through the wired/wireless network, receiving control commands input by the user and audio and image information of the user, and transmitting the same to the main terminal, in which the main terminal outputs the voice and image information of the user transmitted from the user terminal through the home appliances or a built-in display unit and a speaker, controls the operation of the home appliances or the main terminal according to the control commands, automatically attempts to make a video call to your device when the frequency characteristic is analyzed from the pet's voice and determined to be in a certain preset state, and provides color spectrum images that change at predetermined intervals around the image information while outputting the image information of the user on the screen of the electronic device or the display unit.

This patented technology also only applies the two-way communication to animals, but it fails to mention any method for feeding animals or preventing them from being failed or malfunctioning of such a feeding means.

Korea Patent Application Publication No. 10-2016-0114790 relates to an interactive toy for resolution of pet dog loneliness, which discloses a device that includes an external case of a polyhedron shape where a rollable through-hole for the pet feed discharge outlet is formed on one side; a pet feed receiving unit, being installed on the external case, in which a rotatable central shaft is installed in the center, the internal space is divided into a plurality of spaces symmetrically about the central shaft and a pet feed discharge outlet is formed at a position corresponding to the through-hole, and the pet feed is received in the divided internal space; a motor unit, which, being connected to the central shaft, is fixedly installed at the bottom of the pet feed receiving unit on the internal side of the external case and rotates the central shaft; and a central control unit for controlling the opening and closing of the discharge outlet through the motor unit.

However, this prior art discloses a means for feeding animals remotely, but does not mention any means to prevent failure or malfunction of such a means, and fails to disclose any method at all as to how to reduce the consumption of electrical energy so as to reduce the occurrence of unmanageable time, during which no feed supply is provided, caused by power source consumption.

Korea Patent Registration No. 10-1914213 (November 1, 2018) discloses a play bowl for feeding pet food.

Such a play bowl for feeding pet food in prior art is configured to include a first container, in which a storage space for receiving feed is formed and a plurality of compartments for partitioning the storage space are installed in a protruded state; a second container, which is detachably coupled to cover the compartments of the first container; a first feeder, which is detachably coupled to the first container in a state where a storage space for storing feed is formed between the first container and the discharge hole through which feed is discharged is formed on the surface thereof; and a second feeder, which is detachably coupled to the second container in a state where a storage space for storing feed is formed between the second container and the discharge hole through which feed is discharged is formed on the surface thereof.

This prior art only discloses a toy for feeding, and there is no operation device by a power source or a remote control via a smartphone, and thus this invention cannot be classified as a remotely controlled management robot for animals that can feed and play at the same time. In addition, the complex structure, in which the feed storage container is divided into two parts and the feeder part is also divided into two types, increases another cause of failure, which is the blockage of feed discharge, and has a problem in that a breeder has no means of remotely detecting such a failure or malfunction even when a failure or malfunction occurs.

Korea Patent Registration No. 10-1889460 (September 4, 2018) discloses an automatic feeding system for a pet noticing a user by detecting pet's movement using a sensing module.

In this invention, the system is characterized in that since the system is connected to a pet feeding device through a network, the system can transmit/receive data, in which the system includes a pet feeding device, which photographs a pet through a camera module and transmits the photographed image to a user terminal when the pet is detected to be around the pet feeding device by the user terminal, where the pet feeding application is installed, and the sensing module, wherein the user terminal automatically launches the installed pet feeding application when the user terminal receives the photographed image of the pet from the pet feeding device, and the pet feeding device, upon receiving the feed supply signal from the user terminal, provides a predetermined amount of feed to the pet.

According to the automatic feeding system for a pet, in which the movement of the pet can be detected and notified by the sensing module proposed in this prior art, when the sensing module detects that the pet is in the vicinity of the pet feeding device, the sensing module photographs the pet through the camera module and transmits the photographed image to the user terminal and automatically operates the pet feeding application that is pre-installed on the user terminal, thereby notifying to the user that the pet is in the vicinity of the pet feeding device, and when the sensing module receives a feeding signal from the user terminal, the pet feeding device provides a predetermined amount of feed to the pet and thereby the feed can be provided to the pet considering the needs of the pet rather than the user. Additionally, the invention disclosed in this prior art can allow the pet to eat the feed regularly, by outputting the recorded user's voice and guiding the pet to the pet feed supply device at a predetermined time on the pet feeding device, in case the pet is not detected within a certain period of time through the sensing module after the user's voice is output repeatedly, the user can determine the failure status of the sensing module or the status of the pet by sending a status report message to the user.

However, even in this prior art, the means for providing the feed is attempted to rely on electronic/mechanical remote control, and thus, there is a high possibility that these precision devices may be failed or broken due to the increased consumption of power source of these devices and aggressive behaviors of the animals against these devices, and the problem of the possibility of malfunction is still not solved.

Additionally, when the power sources of these prior art devices are exhausted, the remote feeding cycle is stopped and the play with the pet is also stopped, and causes serious starvation and isolation to the pet. Therefore, there still remains a problem in that there are no realistic and practical measures for the unmanageable time period during which remote control management by the breeder becomes impossible.

Therefore, in order to minimize the possibility of damage or malfunction of these feeding devices due to aggressive behavior by animals or by rough handling, there is an urgent need for the development of an animal feeding robot, which meets the following requirements: 1) removal of a device that requires precise electronic/mechanical control; 2) complete removal of features of electronic control and mechanical operation that require power consumption; and 3) at least the feeding function can operate in any case, even when the power source is exhausted or discharged and the function to play with animals is stopped.

### SUMMARY OF THE INVENTION

An object of the present invention is to provide an animal feeding robot, which can maximize remote control uptime by minimizing power source consumption by eliminating the use of mechanical devices for discharging feed, various kinds of detection sensors, or sound generating devices associated with a significant level of power source consumption in animal feeding robots.

Another object of the present invention is to provide an animal feeding robot, which can discharge feed by the action of a physical external force or gravity by eliminating the use of a sophisticated and complex mechanical discharge control device or electronically-operated control device for feed discharge, thereby reducing the chances of malfunction or breakdown of the robot due to an aggressive behavior of the animal against the robot, and allowing the feed to be discharged by the action of a physical external force or by gravity even when the robot's power source is completely exhausted, and ultimately preventing the termination of feeding even when the power source is exhausted.

Still another object of the present invention is to provide an animal feeding robot, which is controlled through wireless internet by a computer program for controlling robots or a remote control application program (hereinafter abbreviated as "control App.") installed on a mobile device (*e.g.,* smartphones) or operated according to an autonomous operation program input into a control unit inside a robot body, wherein the animal feeding robot includes: a signal transmission/reception unit for receiving control signals from the control application program; wheels installed on rotation shafts protruding on both sides of the robot body; a motor for transmitting a rotational force of the rotation shaft to the wheels; a power source for providing power to the motor, the control unit, and the signal receiving unit; and a power source switch; a control unit for controlling the direction and speed of the robot with regard to forward movement, backward movement, and rotation, or for rotating the robot body in response to contact detection of a detection sensor according to an autonomous operation mode program input to the control unit, according to the control signal received through the wireless internet from the control application program; a feed discharge unit for storing and discharging animal feed; a housing of the robot body for enclosing the motor, the power source, the power source switch, the signal transmission/reception unit, the control unit, the rotation shaft, and the feed discharge unit; and bearings disposed between the housing of the robot body and the rotation shaft; and wherein the feed is discharged to the outside by the action of an external force or gravity applied to the robot by an animal, without a separate electronic or mechanical activation device designed only for feeding.

The animal robot for achieving the above objects of the present invention is a robot which is operated autonomously according to a built-in program or is remotely controlled through wireless internet. The robot of the present invention is operated by a remote control application program installed on a smartphone or by an application program input into the control unit of the robot body.

The robot of the present invention is an animal feeding robot, which is controlled through wireless internet by a computer program for remote control or a remote control application program (hereinafter abbreviated as "control App.") installed on a mobile device (*e.g.,* smartphones) or operated according to an autonomous operation program input into a control unit inside a robot body. The robot of the present invention is an animal feeding robot, which includes: a signal receiving unit, which receives a control signal from the control App. installed on an external device; movable wheels installed on both sides of the robot; a motor for driving the wheels; a power source, which provides electricity to the motor, the control unit, and the signal receiving unit, and a power source ON/OFF switch; a forward/backward movement control unit, a direction control unit, and a speed control unit to control the movement direction and speed of the robot, which, being control units for controlling the operation of the robot according to control signals received from the control App. or the control of the built-in App., controls the direction and speed of movement of the robot according to the signals detected from the contact detection sensor built into the robot or according to the signals by the operation of a joystick or buttons of the control App.; and a feed discharge unit, which stores and discharges animal feed, wherein a separate electronically/mechanically-operated device only for the purpose of feed discharge is not used, and thus the feed can be discharged to the outside by the action of a physical external force or gravity.

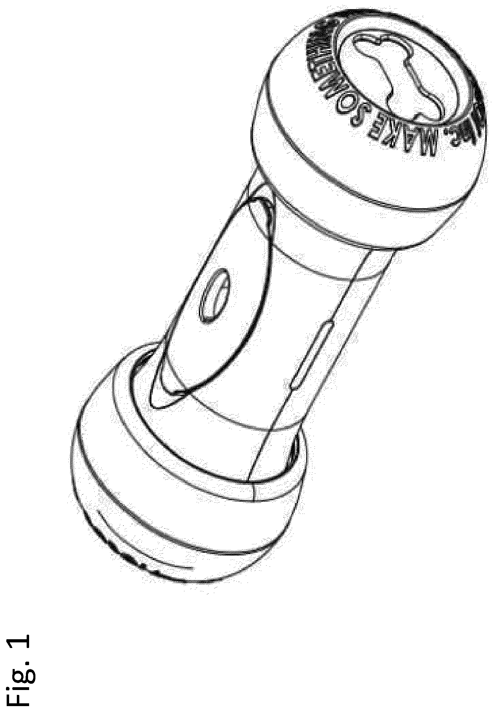

The animal feeding robot of the present invention, as shown in FIG. 1, consists of two left and right wheels, respectively, and a body located between the two left and right wheels, respectively, in which the body unit includes an operation motor, a power source device, a rotation speed changing gear, a rotation shaft, bearings disposed between the rotation shaft and a body housing, a control unit, a feed container, and a feed discharge outlet. A program for controlling the operation of the robot in the autonomous operation mode is input into the control unit inside the body.

The robot body of the present invention is connected to freely rotate about the center of the wheels and the rotation shaft that traverses the center of the body, and thus, the body is capable of performing a roly-poly reaction around the rotation shaft. In the feeding robot of the present invention, heavy parts are arranged in a lower part of the body so as to control the feed discharge through the roly-poly reaction of the body.

The upper part of the body is made to be much lighter than the lower part of the body by disproportionately disposing heavier parts at the lower parts of the body such that 50% or more of the body weight of the feeding robot of the present invention is concentrated on the lower parts of the body.

Since the lower part of the body of the feeding robot of the present invention is heavier than the upper part of the body, the robot shows a roly-poly rebound, in which the lower part of the body moves below the wheel shaft while the upper part of the body moves above the wheel shaft like a roly-poly toy by the action of gravity, even when the body is temporarily flipped over or tilted around the rotation shaft.

It is an important technical feature of the feeding robot of the present invention that, by making the weight of the lower part of the body to be heavier than that of the upper part, the feeding robot exhibits a roly-poly rebound, in which the light upper part rebounds above the wheel shaft while the heavy lower part returns to be positioned below the wheel shaft.

In order to adjust the weight of the lower part of the body of the feeding robot of the present invention to be heavier than that of the upper part of the body, relatively heavy-weight operation motors, power source batteries, *etc.* are intensely disposed at the lower part of the body, whereas a relatively light-weight feed container is disposed in the upper part.

In order to reinforce the roly-poly reaction, which is a characteristic of the present invention, a weighting measure of appropriate weighting measure may be additionally disposed in a lower part of the body as necessary. The total weight of the lower part is increased such that the total weight of the parts disposed in the lower part of the body accounts for at least 50% of the total weight of the body in a state where the feed is maximally filled into the feed container in the upper part of the body.

As described above, by placing heavy parts on the lower part of the body and light-weight parts on the upper part of the body, the lower part of the body returns to the lower part by the action of gravity and the upper part returns again to a position above the upper part of the wheel shaft even when the body is flipped over or tilted about the rotation shaft instantly.

Other technical features of the feeding robot of the present invention are that the feed container is placed on the upper part of the body located above the wheel shaft by the roly-poly reaction, the feed discharge outlet is formed on top of the feed container, and the discharge direction of such feed discharge outlet is formed to be directed upward.

That is, since the feed discharge outlet is formed on top of the feed container and the direction of the feed discharge outlet is formed to be directed upward, the feed filled into the feed container does not spill down in a state where the body is normally aligned so that the upper part is located above the lower part about the wheel shaft by the action of gravity.

However, at the moment when a dog or cat makes a physical impact on the feeding robot of the present invention or bites and shakes the feeding robot and thus the feed discharge outlet of the feed container faces downward, the feed contained in the feed container is discharged downward through the downward-facing feed discharge outlet, by the action of gravity or physical impact.

Even when the upper and lower parts of the robot body of the present invention are instantly flipped over as such by the action of an external force and the feed is discharged as a result, the upper part of the body goes back up and the lower part of the body goes back down as the robot bounces back up like a roly-poly toy, the feed discharge outlet, which is formed upward on top of the feed container at the upper part of the body, is directed upward again, and thereby the feeding discharge is stopped.

That is, when the body of the feeding robot of the present invention is turned over by an external force due to a physical impact, the feed is discharged downward, however, when the external force is stopped, the heavy lower part of the body is returned to a position below the feed container through the roly-poly reaction caused by the action of gravity, and thereby the feed discharge is stopped at the feed discharge outlet, which is configured to face upward from the upper part of the body.

As described above, the body of the feeding robot of the present invention has a technical characteristic that the feed discharge is controlled by the action of gravity by causing the roly-poly reaction according to the disproportionate arrangement of the weight between the lower part and the upper part.

Due to the technical features of the feeding robot of the present invention, the feeding robot of the present invention does not require a separate electrically- or mechanically-operated device for the control of feed discharge and exhibits a technical effect that feed discharge is controlled by the roly-poly reaction due to the action of gravity.

Bearings are installed between the rotation shaft, which transmits the rotational force of the motor of the feeding robot of the present invention to the wheels, and the body. The bearings block the transmission of a torque to the body as much as possible while supporting the rotation of the rotation shaft.

When the rotation shaft rotates at a constant speed, the torque transmitted to the body through the bearings becomes weak or corresponds to one less than the critical torque required for the body to be flipped over, despite the rotation of the wheels, the normal arrangement is maintained, in which the body does not turn along and the upper part of the body is placed above the rotation shaft and the lower part of the body is placed below the rotation shaft.

In order to flip the upper part and the lower part of the body by rotating the normally arranged body about the rotation shaft, it is required that more than a certain level of torque, in excess of the critical torque required to flip the body, be transmitted from the rotation shaft to the body through the bearings.

As the difference in weight increases between the upper part and the lower part of the body of the feeding robot of the present invention, preferably, as the difference in weight increases between the upper part and the lower part by increasing the weight of the lower part by adding a weighting measure to the lower part of the body, the critical torque required to flip the body is increased further.

There is no or a very little torque transmitted to the body through the bearings in the rotating shaft rotating at a constant speed. As the speed at which the rotation shaft increases or decreases becomes greater, that is, as the acceleration becomes greater, the torque transmitted from the rotation shaft to the body through the bearings increases.

The essential function of the bearings is to prevent the torque of the rotation shaft from being transmitted to the body. However, since the ability of blocking torque transmission by the bearings is not perfect, and thus, when the rotational acceleration is generated by suddenly changing the rotation speed of the rotation shaft, part of the torque of the rotation shaft is also transmitted to the body.

As the torque blocking efficiency of the bearings becomes low, the torque being transmitted to the body becomes large, whereas as the torque blocking efficiency of the bearings becomes high, the torque being transmitted to the body becomes small.

Even when a torque, which can be adjusted by rotational acceleration and torque blocking efficiency of the bearings, is transmitted to the body as such, in order for the body to receive a torque and rotate it 180 degrees around the rotation shaft, the torque transmitted through the bearings must be greater than the body's rotation resistance due to the difference in weight between the lower part and the upper part of the body.

As the difference in weight become large between the upper part and the lower part of the body, and as the center of gravity of the lower part of the body goes away from the rotation shaft, the critical torque required to rotate and flip the body increases.

Therefore, as the minimum critical torque required to rotate the body increases, the torque required to flip the body to flip over must be greater, and to this end, the rotational acceleration of the rotation shaft must be greater or the torque blocking efficiency of the bearings must be lowered.

Since the feed discharge outlet of the feed container disposed on the main body of the feeding robot of the present invention is directed upward, at the moment when the main body rotates about 180 degrees around the rotation shaft and thus the feed discharge outlet is directed downward, the feed is poured downward by the action of gravity.

Accordingly, it is possible to control the problem that the body is flipped over around the rotation shaft and the feed is discharged downward, by adjusting the rotational resistance caused by the weight difference between the upper part and the lower part of the body.

Additionally, when a torque, which is less than the wheels' combined torque of rolling resistance and static friction, is transmitted to the wheels, the robot does not move and remains stationary because the wheels do not roll. In particular, when a torque greater than the critical rotational resistance of the body is transmitted to the body, the body is flipped over in a state where the robot is stopped.

That is, when a torque, which is less than the sum of the wheels' rolling resistance and static friction, is transmitted to the wheels, and a torque greater than the body's rolling resistance is transmitted to the body, the robot is turned over while rotating its body in a state where the robot is stopped, and the feed is discharged downward by the action of gravity.

When the rotational acceleration of the rotation shaft is raised, the speed of feed discharge also increases as the cycle of rotation/overturn of the body. The reduction of the weight difference between the upper part and the lower part of the body, or the reduction of the weighting measure, makes the rotation/overturn of the body easier thereby increasing the feed discharge rate.

In the feeding robot of the present invention, various types of bearings may be used to adjust torque blocking efficiency, and sliding bearings made of various materials may also be used. Suitably, plastic linear bearings may be used, and more suitably polyacetal bearings may be used.

In a specific embodiment of the bearings to be mounted on the body of feeding robot of the present invention, plain bearings made using a polyacetal ring as a sliding material are suitable.

As used herein, the term "control mode" means that a breeder operates the feeding robot of the present invention in a short distance or a remote location through wireless internet communication using the robot control application program (hereinafter "control App.") installed on a computer or smartphone.

In the control mode, the breeder operates the feeding robot of the present invention, via remote control through wireless communication, to perform forward movement, backward movement, rotation, and stop of the feeding robot using the control App.

In the control mode, the operations of forward movement and backward movement are performed so as to mediate moderate acceleration and deceleration operations of wheels. In the control mode, when the wheels start to move, the robot body is prevented from rotating due to the torque transmission from the wheels, by slowly increasing the rotational speed of the wheel rotation shaft, that is, by lowering the acceleration of rotation.

In the control mode, the overturn of the robot body due to the rotation of the robot body can be prevented by maximally reducing the rotational acceleration of the rotation shaft so as to keep the torque transmitted to the body to be below the rotational resistance of the robot body. That is, since the rotation/overturn of the body cannot be performed in the control mode, the feed discharge outlet cannot face downward and thus feed discharge due to gravity cannot occur.

That is, since the rotation/overturn of the body is prevented in the control mode and the feed discharge outlet maintains its upright position and cannot be directed downward, the discharge of feed downward by gravity does not occur. In the control mode, the rotational inversion of the body does not occur and the feed discharge outlet, which is formed in the feed container of the upper part of the body, is prevented from facing downward, and thus, the discharge of feed downward by gravity does not occur.

As used herein, the autonomous operation mode of operation refers to a case where the robot is not operated by a breeder but is operated according to a program entered into the control unit. When the breeder selects the autonomous operation mode in control App., the communication between the control App. installed in an external device and the feeding robot of the present invention is stopped, and the program entered into the control unit inside the robot (hereinafter, abbreviated as "built-in App.") starts to operate.

In the autonomous operation mode, when an animal comes in contact with the robot of the present invention and a sensor installed in the robot transmits a signal to the built-in App., the program transmits instructions to the operation motor so as to rapidly increase the wheels' rotational speed to generate rotational acceleration on the wheels.

In the autonomous operation mode, when an animal under breeding approaches the feeding robot of the present invention and makes a physical contact with the robot, a sensing sensor installed on the body of the feeding robot detects the contact. The detection sensor that can be used in the present invention may be a gyro sensor which is well known in the art. The signal value transmitted to the gyro sensor that detects the animal contact with the feeding robot of the present invention is updated to the current signal value every 4 milliseconds (ms) (10⁻³ seconds).

When the robot makes a contact with an animal, the signal value of the detection sensor changes. When the difference between the previous signal value and the current signal value is over a certain value, the program determines that the animal has contacted the robot and transmits a signal to operate the motor rapidly.

As such, in the autonomous operation mode, the external force applied by the animal on the robot is detected by the sensor, and when the motor starts to run according to the signal of the built-in App., the rotation speed is increased by the rapid increase of the rotation speed within a short time.

According to the motor driving instruction transmitted by the built-in App. in response to the transmission of contact signal from the detection sensor, when the increase in the rotational acceleration of the motor rotation shaft increases the torque transmitted to the body through the bearings increases, whereas when the torque transmitted to the body exceeds the critical rotational resistance according to the weight distribution of the body, the feed discharge outlet of the feed container faces downward while the body flips over by rotating 180 degrees around the rotation shaft, and thereby the feed is discharged by the action of gravity.

In such an autonomous operation mode, the feed discharge by the rotation of the body in response to the instant high-speed operation, in response to the moment when the animal makes a contact with the robot of the present invention, stimulates the prey hunt instinct of breeding dogs and cats.

In the feeding robot of the present invention, dogs or cats which have learned the feed discharge process in this autonomous operation mode frequently make voluntary attempts to come in contact with the robot of the present invention to obtain feed.

When a breeder selects the autonomous operation mode of operation in control App. in an external device, the wireless communication between the program and the robot is stopped and the operation of the robot begins according to the built-in App. input into the control unit of the feeding robot of the present invention.

In the autonomous operation mode, robot tracking activities and frequent contact attempts to obtain feed by dogs and cats under breeding are made. When a dog or cat successfully tracks and attempts to make a physical contact with the robot of the present invention, the feed is discharged to satisfy the dog or cat as a performance reward.

In the autonomous operation mode of the feeding robot of the present invention, in case where the animal does not make a contact with the robot for a certain period of time, the autonomous feed discharge function of the feeding robot itself is intermittently operated at random time intervals by the autonomous operation program of the built-in App.

For example, in a situation where the autonomous operation mode is controlled by the built-in App., if the animal makes no contact with the robot for more than 10 minutes, the motor is suddenly operated at a rapid rate according to the signal transmitted from the built-in App. and generates rotational acceleration and transmits a torque to the body to flip the robot body thereby releasing feed.

The automatic feed discharge function according to such a built-in App., in case where the animal contact is not made for a certain period of time after the animal's contact with the robot, attracts the attention of dogs and cats and induce their feeding activity, by activating the automatic feed discharge function via the operation of the program to discharge the feed to the outside.

### BRIEF DESCRIPTION OF THE DRAWINGS

FIGS. 1 and 2 illustrate external perspective views of the body of an animal feeding robot body according to an embodiment of the present invention.
FIG. 3 is a schematic block diagram illustrating the technical configuration and operation of an animal feeding robot according to an embodiment of the present invention.
FIG. 4 is a schematic block diagram illustrating a smartphone for remote operation of a robot according to an embodiment of the present invention.

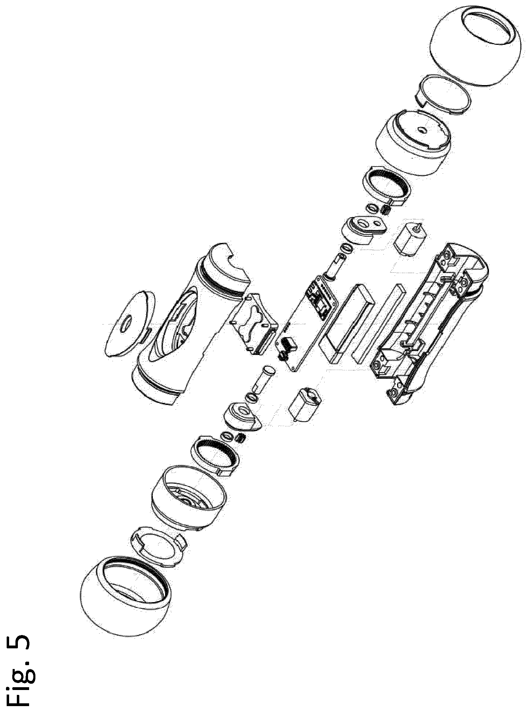

FIG. 5 illustrates a three-dimensional exploded perspective view of a robot according to an embodiment of the present invention.

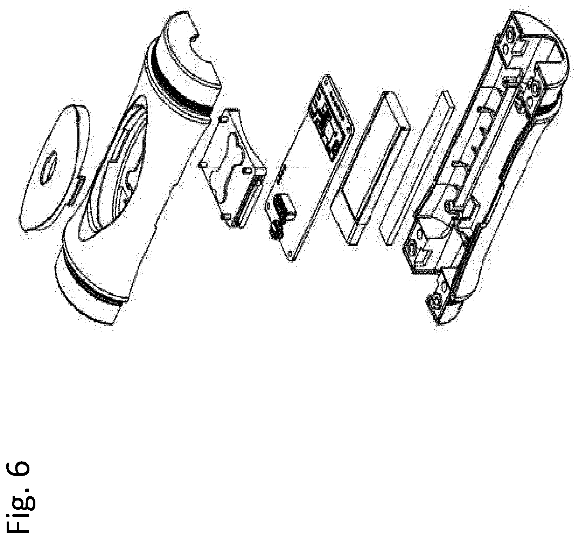

FIG. 6 illustrates an exploded perspective view of a robot body according to an embodiment of the present invention.

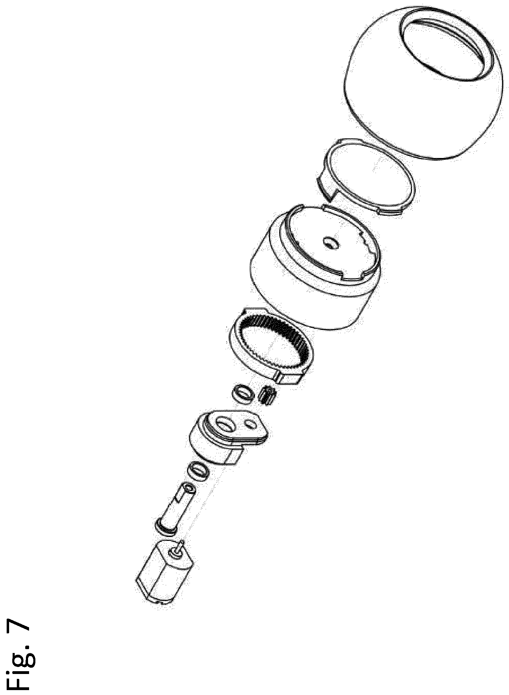

FIG. 7 illustrates an exploded perspective view of a motor, a reduction gear, a rotation shaft, bearings, a wheel rim, and a wheel constituting the operation unit of the robot of the present invention.
FIG. 8 illustrates a cross-sectional view of a robot body, in which a weighting measure is installed in a lower part thereof, according to an embodiment of the present invention.

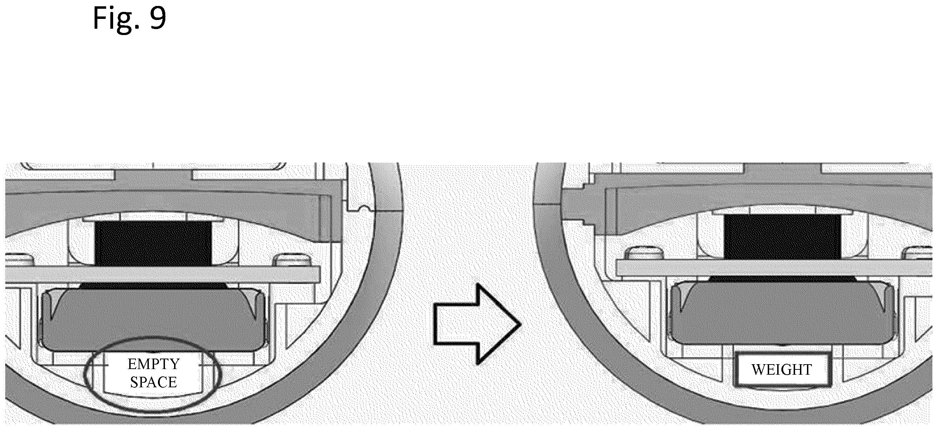

FIG. 9 illustrates a cross-sectional view of a robot body, in which a weighting measure is installed in a lower part thereof, according to an embodiment of the present invention.

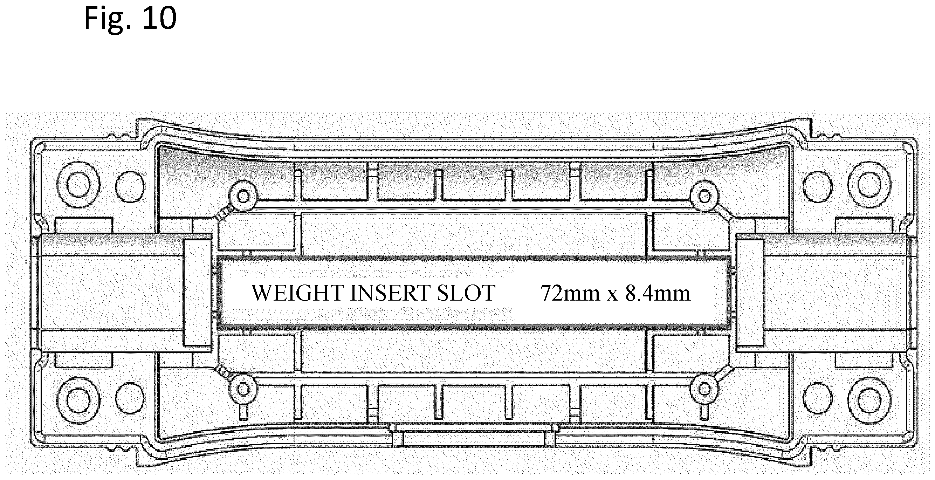

FIG. 10 illustrates a cross-sectional view of a robot body, in which a weighting measure is installed in the central bottom of a lower part thereof, according to an embodiment of the present invention.

Hereinafter, the technical features of the animal feeding robot of the present invention will be described in more detail with reference to the drawings illustrating exemplary embodiments of the present invention. However, these descriptions of technical features are not intended to limit the scope of the present invention thereto.

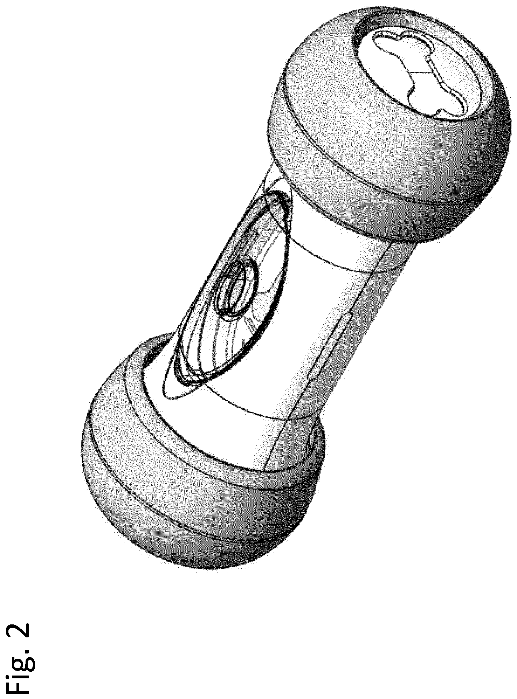

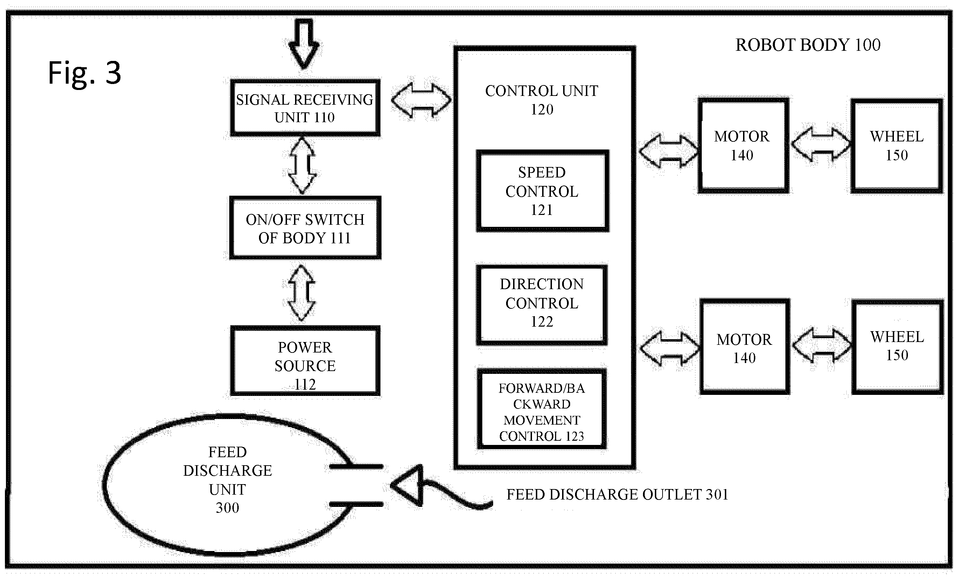

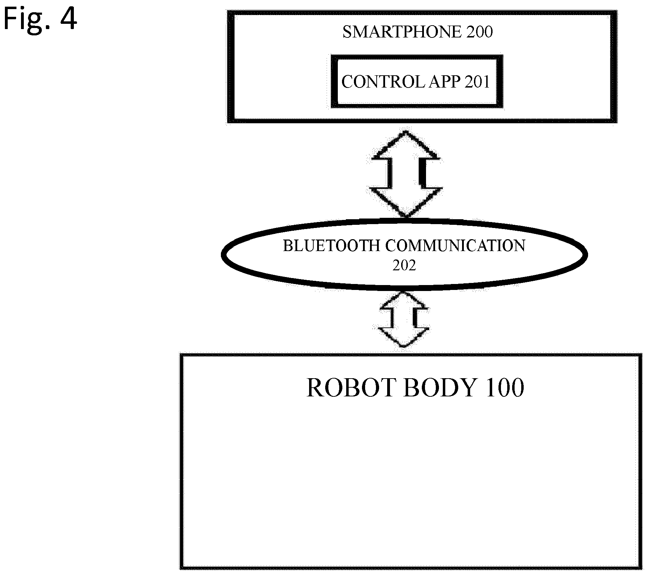

FIG. 1 is a perspective view illustrating the external appearance of an animal feeding robot according to an embodiment of the present invention, and FIG. 2 is a view illustrating a feed discharge unit 300 made of a transparent material. FIG. 3 is a schematic block diagram illustrating a technical configuration of a robot body according to an exemplary embodiment of the present invention, and FIG. 4 is a conceptual diagram illustrating a control mode state for remote controll of a robot through Bluetooth or Wi-Fi communication with an App. installed in a smartphone according to an embodiment of the present invention.

### DESCRIPTION OF EXEMPLARY EMBODIMENTS

In breeder control mode, the robot 100 of the present invention is controlled by a joystick or buttons on the screen of an App. 201 program installed on a smartphone 200 capable of controlling the robot.

Referring to FIGS. 1 and 2, the robot 100 is operated autonomously according to a built-in App. or is remotely controlled by a smartphone 200.

In the smartphone 200, when the robot 100 is in a remote control mode, a control App. 201, which can allow the user to control the operation of the robot 100, is installed.

The robot 100 includes a signal receiving unit 110, wheels 150, a motor 140, a feed discharge unit 300, a body switch 111, and a control unit 180.

First, the signal receiving unit 110 receives a control signal generated from the smartphone 200. The control signal is a signal for operating the robot 100, and it controls the speed of the robot 100 and controls the forward and backward movements and the left and right rotations.

The two wheels 150 are rotatably connected to both sides of the robot 100 to move the robot 100. The wheels 150 are driven by the power from a motor 140.

The motor 140 is installed inside the body of the robot 100 and generates power to operate the robot 100 and transmits the power to the two wheels 150, respectively. That is, the motor 140 consists of two or more motors, and is configured to transmit power to each of two wheels 150. Thus, the two wheels 150 can be driven independently by their respective motor, enabling rapid rotation and rapid braking.

When a part of the animal's body applies a physical external force on the robot in an autonomous mode of operation, the robot body is flipped over around the rotation shaft and the discharging unit 300 discharges feed. In a case where the robot is operated in an autonomous mode which is not controlled by a breeder, if an animal makes a contact with the robot by tracking the robot, the feed discharge unit 300 is configured to discharge the feed through the feed discharge unit 300. This makes animals more interested in robots by providing an effect of feed reward even to animals which are not interested in the robot 100, in case where the animals follow the movement of the robot 100 and catch the robot.

Meanwhile, the robot 100 can operate in two modes: a control mode remotely controlled by a breeder; and an autonomous operation mode operated under the control of a program of a control App. without the control of a breeder. In the control mode, the robot 100 operates according to the controls with regard to the speed, direction, and forward/backward movement by the control unit 120 according to the control App. 201.

The autonomous operation mode is a mode, in which the feed is discharged by an external force applied to the robot by an animal, or the feed is discharged by gravity via rotational inversion of the body according to the signal of the contact detection sensor.

In the autonomous operation mode, in a case where no robot contact is detected for a certain period of time that is entered into the autonomous operation program of the control unit inside the body, it operates an instant wheel drive to generate rotational acceleration and causes the robot body to rotate and flip over, and thereby the feed is discharged downward by the action of gravity through a downward-faced feed discharge outlet.

Additionally, the control unit 120 can be operated in the control mode, which is a mode operated by the control App. 201 of the smartphone 200. In the control mode, the robot 100 receives control signals generated by the operation of the control App. of the smartphone 200 and moves according to the control signals.

Referring to FIG. 3, the App. of the smartphone 200 is configured to control the speed control unit 121, the forward/backward movement control unit 123, the direction control unit 122, and the ON/OFF switch 111. The speed control unit 121 controls the movement speed of the robot 100. The forward/backward movement control unit 123 and the direction control unit 122 are controlled using a joystick and buttons of the control App. of the smartphone 200. For example, the direction control unit 122 shifts the direction of the robot 100 to the left by operating the right motor between the motors 140, which drive the wheels 150, faster than the left motor.

In contrast, the direction control unit 122 rotates the robot 100 to the right by operating the left motor between the motors 140, which drive the wheels 150, faster than the right motor. In extreme cases, the robot may be rotated by stopping one motor while maximizing the other motor.

The feed discharge unit 300 discharges the feed by the action of gravity and provides the feed to an animal when a physical external force is applied to the robot.

As described above, the signal transmission/reception unit 110 can operate the robot 100 by transmitting, to the robot 100, control signals for controlling the speed control unit 121, the forward/backward movement control unit 123, and the direction control unit 122, by a smartphone App. The signal transmission/reception unit 110 performs wireless communication with the App. on the smartphone, and the control signals may communicate with the robot 100 using various communication methods (*e.g.,* Bluetooth, Wi-Fi, *etc*.), and may use an infrared signal.

In the animal robots known to the art to date, small independent primary or secondary batteries, such as lithium polymer batteries and traditional batteries well known in the art, are being used as power sources for mechanical/electronic operations, and communication devices.

Considering the size of the oral cavity of animals, small-sized batteries are the only option for independent primary or secondary batteries that can be used in animal feeding robots. The capacity of these small-sized batteries must be limited, and therefore, the time available for remote control of animal robots to continue mechanical/electronic operation is limited to less than 10 hours at maximum.

As a result, due to the capacity limitation of independent batteries to be mounted in animal feeding robots, animal robots known to the art so far have a very limited amount of time for remote operation, which is normally less than 10 hours.

Because of these problems, the time for a breeder to leave the animal unattended is limited to the available time range of power sources, in cases where the breeder goes to work, travels, *etc.*

However, when a given power source is exhausted or completely discharged in cases where the breeder is absent or in a remote place, the functions to raise or manage animals through an animal robot are stopped. That is, the robot has a fatal problem in that the natural functions which are expected to be exhibited through an animal feeding robot may be stopped without notice in the absence of the breeder.

Therefore, in the animal robot of the present invention, even when the robot operation is stopped due to the exhaustion of the power source, the feeding function of the robot can be exhibited by inducing the behavior and physical contact of an animal by stimulating the sight and hearing of the animal.

For this purpose, the feed discharge unit 300 is manufactured using a transparent and strong materials so that the feed filled inside the robot can be detected through an olfactory sense and an auditory sense of an animal. The animal is stimulated by visual confirmation of the feed remaining inside the feed discharge unit made of a transparent material mounted on the robot of the present invention.

A feed discharge outlet 301, which discharges the feed, that is filled into the transparent feed discharge unit mounted to the robot of the present invention, to the outside upon receipt of a physical force when an animal makes an active contact with or aggressively strikes the robot of the present invention, is formed.

Still another embodiment of the present invention includes a feed discharge unit 300, which is made of a transparent material so that the inside where the feed is stored can be looked through. A feed discharge outlet 301, which discharges the feed, that is filled into the transparent feed discharge unit mounted to the robot of the present invention, to the outside upon receipt of a physical force when an animal makes an active contact with or aggressively strikes the robot of the present invention, is formed.

The feed discharge unit 300, in which the feed discharge outlet 301 is formed, can be manufactured from various synthetic resin materials with transparent and rigid physical properties well known in the art, such as polycarbonates, polymethyl methacrylates, polystyrene copolymers, copolymers of polymethyl methacrylate butadiene, *etc.*

There is no particular limitation on the size of the feed discharge outlet 301 formed in the transparent feed discharge unit 300 of the animal robot of the present invention. However, it is generally suitable that the feed discharge outlet 301 has a size so that commercially-available animal feed with a diameter of 1 mm to 10 mm can be discharged in quantities of one or two at a time per external impact.

Considering that the feeding function should be maintained throughout the absence period even when the power source is exhausted during the long-term absence of a breeder, it is most desirable to keep feed in the transparent feed discharge unit 300 of the robot of the present invention throughout the entire period of the absence of the breeder, it is not appropriate to discharge a large amount of feed at one time.

Therefore, considering the amount of feed being filled into and the time period of the breeder's absence, the feed discharge rate, given the amount of food being fed and the time that a breeder can be absent, it is desirable that the feed discharge be controlled so that a small amount of feed can be discharged during the entire period of the breeder's absence.

The animal feeding robots known in the art mostly suggest electronic control or mechanical operation as a technical means for controlling the amount of feed discharge.

However, since most of the inventions in the prior art cannot be operated at all when the power source is exhausted or discharged, remote feeding is often stopped without notice, often causing hunger pain in animals for a considerable period of time.

Therefore, in the present invention, the size of the diameter of the feed discharge outlet formed in the feed discharge unit 300 made of a transparent material can be adjusted by controlling the feed discharge rate so that the feeding function is not interrupted during the absence of a breeder.

Therefore, it is desirable that the diameter of the feed discharge outlet of the robot of the present invention be determined so that the feed discharge can be made at a constant rate for at least 24 hours, and preferably 48 hours, when the total amount of feed that can be stored is discharged at a constant rate.

Considering that the size of one piece of animal feed commercially available at present is less than about 10 mm in diameter, it is desirable that the diameter of the feed discharge outlet of the robot of the present invention be in the range of 0.1 mm to 20 mm, and preferably 10 mm to 15 mm so that the feed can be discharged in quantities of one or two at a time per physical impact

The wheels of the feeding robot of the present invention rotate at a maximum of 600 RPM. To this end, a voltage in a certain range, for example, -3.6 V to 3.6 V, may be applied to the motor through the program of control App. The robot starts to operate when a voltage of 0.63 V or higher is applied to the motor. The wheels rotate at the maximum speed of 600 RPM when a voltage of 3.6 V is applied to the motor.

When the feeding robot of the present invention is to move forward or backward or rotate in the control mode, the transmission of a torque to the body is minimized by maintaining rotational acceleration at a low level by slowing the increase rate of the voltage to be applied and prevents the body from being flipped over thereby blocking the discharge of the feed.

While the body is prevented from being flipped over by slowly increasing the voltage at 0.63 V in the control mode, in the autonomous operation mode, the voltage to be applied to the motor to discharge the feed starts from 1.52 V and is rapidly increased to 3.6 V to increase rotational acceleration, thereby causing the overturn of the body.

The range of voltage that can be applied to the motor via the control of the control App. (program) installed on a breeder's smartphone is in the range of -3.6 V to 3.6 V, and the left and right wheels can independently rotate in forward and reverse directions, and thus the left and right wheels can rotate in opposite directions with each other.

When the robot of the present invention runs at a maximum speed of about 1.5 m/s, the wheels rotate at about 490 RPM and the motor rotates at 2,940 RPM. The robot starts to move when the voltage of 0.63 V is applied to the motor. When the voltage reached 3.6 V by slowly accelerating the motor, the wheel speed reaches 490 RPM at full speed.

When a voltage of 1.52 V is applied instantaneously in a stationary state, only the body itself rotates in place before the robot starts running and the feed is discharged, in which the RPM of the rotation shaft reaches about 320 RPM.

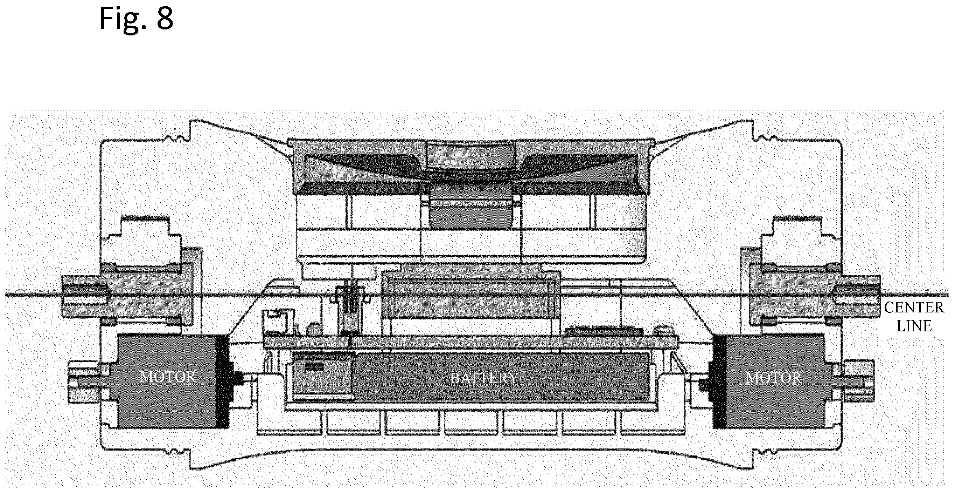

FIG. 8 illustrates a robot according to an embodiment of the present invention, in which the center of gravity of the body is maximally lowered by placing heavy parts at the lower part of the body. Preferably, the critical rotational resistance of the body is increased by adding a weighting measure 400 to a lower part of the body. FIG. 8 illustrates an embodiment, in which a weighting measure is added to an empty space in the lower part of the body so as to maximally lower the center of gravity of the body thereby increasing the critical rotational resistance of the body. The following Table 1 shows the results according to an embodiment of the present invention with and without the addition of a weighting measure.

**[Table 1]**

| | | Part Name | Weight (Before) | Weight (After) | Quantity | Total (Before) | Total (After) | Total | Total |
|---|---|---|---|---|---|---|---|---|---|
| | | Upper Housing | 37 g | 37 g | 1 | 37 g | 37 g | | |
| Body | Upper Part | Feed Container | 3.9 g | 3.9 g | 1 | 3.9 g | 3.9 g | 43.7 g | 43.7 g |
| | | LED | 2.7 g | 2.7 g | 1 | 2.7 g | 2.7 g | | |
| | | Lower Housing | 33 g | 32.2 g | 1 | 33 g | 32.2 g | | |
| | | Control Board | 9.4 g | 9.4 g | 1 | 9.4 g | 9.4 g | | |
| | | Motor | 10.1 g | 10.1 g | 2 | 20.2 g | 20.2 g | | |
| | | Battery | 13.6 g | 13.6 g | 1 | 13.6 g | 13.6 g | | |
| | | Plastice Bearing | less than 0.1 g | | 4 | less than 0.1 g | | | |
| | Lower Part | Rotation Shaft | 4.85 g | 4.85 g | 2 | 9.7g | 9.7g | 98.3 g | 111 g |
| | | Operation Module | 3.15 g | 3.15 g | 2 | 6.3g | 6.3g | | |
| | | Pinion Gear | less than 0.1 g | | 2 | less than 0.1 g | | | |
| | | Body Bolt | 0.625g | 0.625g | 4 | 2.5g | 2.5g | | |
| | | Circuit Bolt | 0.15g | 0.15g | 4 | 0.6g | 0.6g | | |
| | | Wiring | 2.9g | 2.9g | 1 | 2.9g | 2.9g | | |
| | | Weighting Measure | X | 13.5g | 1 | X | 13.5g | | |
| | | | | | | | | 142 g | 154.7g |

As shown in Table 1, it can be seen that when a weighting measure 400 was additionally installed, the weight ratio of the upper body to the lower body increased by about 13% from 1:2.25 to 1:2.54. In the case where a weighting measure was not installed, the center of gravity of the body was 0.86 mm below the center of the rotation shaft, whereas when a weighting measure was installed, the center of gravity of the body was lowered by 2.57 mm from the center of the rotation shaft.

When a weighting measure was not additionally added, the voltage required for operation of the motor in the control mode was 0.653 V, whereas, in the autonomous operation mode, the motor voltage for feed discharge by body rotation in a stationary state was 1.16 V, thus showing a narrow gap between the two voltages for operation.

The voltage for motor operation after the installation of a weighting measure in the control mode was 0.63 V, whereas, in the autonomous operation mode, the motor voltage for feed discharge by body rotation in a stationary state was 1.52 V, thus showing an increased gap between the voltage for running a robot and the voltage for feed discharge.

After the installation of a weighting measure, when the same voltage was applied to the motor, the angle of inclination of the body from the vertical axis was reduced by 24.4% from about 37 degrees to about 28 degrees for being affected by the rotation of the rotation shaft. That is, the angle of inclination of the body from the vertical axis was reduced because the weight of the body was affected by the torque of the rotation shaft due to the addition of a weighting measure, thus providing driving stability. In addition, the time required for the robot to return to its original position by a roly-poly reaction after the body was tilted at 45 degrees in a non-powered state after the addition of a weighting measure was also reduced by about 21.4% from 0.89 seconds to 0.7 seconds.

The following Table 2 summarizes the dynamic characteristics of the animal feeding robot according to an embodiment of the present invention.

**[Table 2]**

| <Torque Calculation> | | | | | |
|---|---|---|---|---|---|
| Total Weight of Robot (m) | 256.0 | g | Time for Reaching Target Speed (t) | 4 | sec |
| Effective Moment of Inertia (J) | 1086.15 | gf-cm² | target speed (Sm) | 1.5 | m/s |
| Acceleration Torque (Ta) | 14.27 | gf-cm | | 5.4 | km/h |
| | 1.40 | mN-m | | 8.20 | rad/s |
| Constant velocity Torque (Tm) | 37.29 | gf-cm | | 491.72 | RPM |
| | 3.65 | mN-m | road friction coefficient (u) | 0.1 | |
| Minimum Torque (Tn-min) | 51.55 | gf-cm | number of motors used (A) | 1 | |
| | 5.05 | mN-m | motor RPM (N) | 2950 | rpm |
| Required Motor Torque (Tn) | 14.32 | gf-cm | gear ratio (G) | 6 | speed reduction |
| | 1.40 | mN-m | Reducing ratio (P) | 60 | % |
| Required Final Torque | 85.92 | gf-cm | allowable tilt angle (Θ) | 0 | deg |
| | 8.42 | mN-m | wheel diameter (D) | 58.26 | mm |
| Motor Torque Relative to N | 21.52 | gf-cm | safety rate | 150 | % |

As described above, the representative forms of the feeding robot of the present invention have been described in detail with reference to the drawings and embodiments. However, these are just embodiments of the present invention, and those skilled in the art can easily derive various modifications and other embodiments equivalent to the present invention from the present invention described above. Therefore, any specific type of feeding robot for implementing the technical ideas described in the claims belongs to the legal protection scope of the present invention.

**[Reference Numerals]**

| | | | |
|---|---|---|---|
| 100 : | robot body | 110 : | signal transmission/reception unit |
| 111 : | robot body ON/OFF switch | 112 : | power source |
| 120 : | control unit | 121 : | speed control unit |
| 122: | direction control unit | 123: | forward/backward movement control unit |
| 140 : | motor | 150 : | wheel |
| 200 : | smartphone | 201 : | control App. |
| 202 : | Bluetooth wireless communication | | |
| 300 : | feed discharge unit | 301 | : feed discharge outlet |
| 400 : | weighting measure | | |

### [Advantageous Effects of the Invention]

The animal feeding robot of the present invention minimizes power source consumption by eliminating the use of an ultrasonic sensor or other electronic sensors that irritate animals unnecessarily, and thus, has the effect of maximizing the time for remote operation in the absence of a breeder.

In addition, the animal feeding robot of the present invention is designed such that the feed can be discharged by the action of gravity or an external force applied by an animal. Therefore, in the absence of a breeder, at least the feeding function will not be stopped even if the mechanical operation is stopped due to the exhaustion or discharge of the power source. Therefore, the animal feeding robot of the present invention has positive effects in breeding of preventing animals from feeling isolated or being starved without notice.

In addition, the animal feeding robot of the present invention is designed such that feed can be discharged by the contact with an animal. Therefore, the animal feeding robot of the present invention has the effect of promoting an active movement of an animal by inducing a voluntary contact with the robot by performing a performance compensation function for the animal's contact with the robot.

The animal feeding robot of the present invention is designed such that the feed is gradually discharged little by little depending on the contact action of the animal without pouring out the feed at once. Therefore, the animal feeding robot of the present invention has the effects of preventing overeating by an animal and increasing the feeding time.

In addition, the animal feeding robot of the present invention is designed such that the feed filled into the feed container shakes and generates a sound whenever an animal applies a physical external force on the robot, and as a result, the robot acousticly can stimulate an animal to induce a more active and aggressive robot contact with the robot. Therefore, the animal feeding robot of the present invention has the effects of preventing animal isolation and indolence.

## Claims

1. An animal feeding robot, which is controlled through wireless internet by a remote control application program installed on a computer or mobile device for robots or operated according to an autonomous operation program input into a robot's built-in control unit,
wherein the animal feeding robot comprises:
a signal transmission/reception unit for receiving control signals from the control application program;
wheels installed on rotation shafts protruding on both sides of the robot body;
a motor for transmitting a rotational force of the rotation shaft to the wheels;
a power source for providing power to the motor, the control unit, and the signal receiving unit; and a power source switch;
a control unit for controlling the direction and speed of the robot with regard to forward movement, backward movement, and rotation, or for rotating the robot body in response to contact detection of a detection sensor according to an autonomous operation mode program input to the control unit, according to the control signal received through the wireless internet from the control application program;
a feed discharge unit for storing and discharging animal feed;
a housing of the robot body for enclosing the motor, the power source, the power source switch, the signal transmission/reception unit, the control unit, the rotation shaft, and the feed discharge unit; and
bearings disposed between the housing of the robot body and the rotation shaft; and
wherein the feed is discharged to the outside by the action of an external force or gravity applied to the robot by an animal, without an extra electronic or mechanical device designed only for food discharge.

2. The animal feeding robot of claim 1, wherein the feed discharge outlet having a diameter of 0.1 mm to 20 mm is formed upward on the feed discharge unit.

3. The animal feeding robot of claim 1, wherein the feed stored in the feed discharge unit is discharged downward by the action of gravity only when the robot body is flipped over and thus the feed discharge outlet is directed downward.

4. The animal feeding robot of claim 3, wherein the action in which the robot body is flipped over is due to the action of an external force applied on the robot by the animal or by the rotation of the robot body around the rotation shaft.

5. The animal feeding robot of claim 1, wherein the lower part of the robot body is heavier than that of the upper part of the rotation shaft, with reference to the rotation shaft.

6. The animal feeding robot of claim 1, wherein a weighting measure is added to the lower part of the robot body.
